# EUROPEAN PATENT APPLICATION

(11) **EP 4 775 808 A1**
(43) Date of publication of application: **15.07.2026**
(21) Application number: 25150986.5
(22) Date of filing: 09.01.2025
(51) Int. Cl.: F02B 19/10, F02B 19/12, F02M 21/02, F02P 13/00, H01T 13/40, H01T 13/54

(54) **SPARK PLUG**

(71) Applicant: Innio Jenbacher GmbH & Co OG, 6200 Jenbach (AT)
(72) Inventor: HOFER, Alexander, 6112 Wattens (AT)
(74) Representative: Torggler & Hofmann Patentanwälte - Innsbruck

(57) **Abstract**

Spark plug for igniting a combustible gaseous fuel mixture in an internal combustion engine, comprising an ignition area, wherein the spark plug is configured to deliver an ignition energy in the ignition area, wherein at least one supply channel (3) for conveying fuel and/or air is provided, the at least one supply channel (3) having an exit opening (4) at the ignition area and an entrance opening (5) positioned distanced from the ignition area.

## Description

The present invention concerns a spark plug for igniting a combustible gaseous fuel mixture in an internal combustion engine, in particular for a gas engine having pre-chambers, with the features of the preamble of claim 1 and an internal combustion engine having such a spark plug.

During operation of an internal combustion engine temperatures of over 1000 °C are reached inside a combustion chamber of the internal combustion engine, which are also the temperatures to which the ignition device of the spark plug is exposed.

Exposed to these temperatures, the ignition device of the spark plug reaches up to 850 °C during operation. This heat has to be dissipated in order to protect the spark plug, or more precisely the ignition device, from damage and to achieve the longest possible service life of the spark plug.

It is commonly known to transfer heat from the ignition device via heat conduction to the spark plug housing or the spark plug base body, with the spark plug housing or the spark plug base body (in most cases threaded or screwed into the cylinder head or the spark plug sleeve) in turn dissipating the heat to surrounding components, such as a cylinder head or a spark plug sleeve.

Due do the efforts to improve the lifetime of a spark plug, the requirements regarding temperature management, i.e. enabling proper heat transfer between the spark plugs on the one hand and the cylinder head or the spark plug sleeves on the other hand, became more and more important.

Therefore, the object of the present disclosure is to provide a spark plug with improved temperature management and/or to implement a spark plug with an increased service life due to better heat dissipation.

This object is achieved by a spark plug for an internal combustion engine having the features of claim 1 and an internal combustion engine having such a spark plug.

Accordingly, a spark plug for igniting a combustible gaseous fuel mixture in an internal combustion engine comprises an ignition area, wherein the spark plug is configured to deliver an ignition energy in the ignition area and at least on supply channel, wherein the at least one supply channel for conveying fuel and/or air is provided, the at least one supply channel having an exit opening at the ignition area and an entrance opening positioned distanced from the ignition area.

By use of the at least one supply channel air, fuel or a mixture of air-fuel (an air-fuel mixture) can be supplied to the combustion chamber or pre-chamber passing, preferably passing via, the ignition area of the spark plug.

Therefore, the air, fuel or air-fuel mixture supplied to the combustion chamber or pre-chamber can be used for active cooling of the ignition area and the surrounding components of the spark plug.

By use of a more affective way of heat dissipation from the ignition device the service life of the spark plug can be increased significantly.

The spark plug particularly preferably comprises an ignition device, preferably electrodes for creating an ignition spark, arranged in or near to the ignition area, wherein a possibility is provided to actively cool the ignition device of the spark plug and therefore provide an alternative or additional way of heat dissipation.

In other embodiments the spark plug and the ignition device are configured to focus a laser beam onto the ignition area for creating the ignition energy in the ignition area (laser spark plug). In such embodiments the at least one supply channel also actively cools the components near the ignition area when the fuel and/or air is conveyed through the at least one supply channel.

Advantageous embodiments of the invention are defined in the dependent claims.

It can be provided that the spark plug comprises a - preferably rotationally symmetric - base body having a receiving cavity, wherein an ignition device is arranged at and/or in the receiving cavity, particular preferred wherein the ignition device is at least partially surrounded by the base body.

The base body of the spark plug may also be referred as spark plug housing.

It can be provided that the exit opening is arranged in the receiving cavity. Therefore, it may be provided that air, fuel or an air-fuel mixture passing the supply channel is directly directed to the ignition device by placing the exit opening in the area of the receiving cavity.

It can be provided that the base body comprises at an outer surface a circumferential groove, wherein the entrance opening of the at least one supply channel is placed at the circumferential groove, preferably at the base of the groove.

By use of a circumferential groove a relative rotational position between the spark plug and the surrounding parts (e.g. the cylinder had or the spark plug sleeve) does not have to be defined, as in each relative rotation position an provided air, fuel or air-fuel mixture can be delivered via the circumferential groove to the entrance opening of the supply channel.

It can be provided that the spark plug comprises a mounting portion, preferably a threaded surface, for mounting the spark plug in the internal combustion engine and/or in a cylinder head and/or in a spark plug sleeve, wherein the entrance opening is arranged at the mounting portion.

It can be provided that the mounting portion
- comprises at least a partial external thread, and/or.
- at least partially surrounds the base body.

As mentioned, it can be provided that an ignition device of the spark plug comprises at least one middle electrode and at least one ground electrode, wherein a spark gap is provided between the at least one middle electrode and the least one ground electrode, preferably wherein the spark gap defines the ignition area.

It can be provided that the base body is designed as ground electrode carrier, preferably wherein the at least one ground electrode is connected to the ground electrode carrier by laser beam welding.

It can be provided that the at least one ground electrode is designed as ring electrode, wherein the ring electrode surrounds a middle electrode of circular shape at least partially, wherein an annular spark gap is formed between the ground electrode and the middle electrode. Preferably the ground electrode is designed as ring electrode having an inner diameter of 4 - 6 mm.

It can be provided that the at least one middle electrode is connected at a centrally arranged middle electrode carrier, preferably connected to the middle electrode carrier by laser beam welding.

It can be provided that an isolator is arranged between the middle electrode carrier and the ground electrode carrier.

Furthermore, the present disclosure provides an internal combustion engine comprising at least one cylinder head and a spark plug according to the previous disclosed embodiments, wherein the spark plug is arranged at the cylinder head facing a combustion chamber of the internal combustion chamber, wherein an injector and/or a valve, preferably an fuel injector, is fluidically connected to the entrance opening to supply air, fuel or air-fuel mixture by use of the supply channel to the combustion chamber passing, preferably passing via, the ignition area of the spark plug.

It can be provided that the internal combustion engine comprises at least one pre-chamber, wherein the ignition area of the spark plug faces the pre-chamber for igniting an air-fuel mixture in the pre-chamber.

Further details and advantages are apparent from the accompanying figures and the following description of the drawings. The figures show:
- Fig. 1: a first embodiment of a cylinder head of an internal combustion engine having a spark plug,
- Fig. 2: the detailed view identified in Fig. 1,
- Fig. 3: a second embodiment of a cylinder head of an internal combustion engine having a spark plug,
- Fig. 4: the detailed view identified in Fig. 3,
- Fig. 5: a third embodiment of a cylinder head of an internal combustion engine having a spark plug, and
- Fig. 6: the detailed view identified in Fig. 5.,

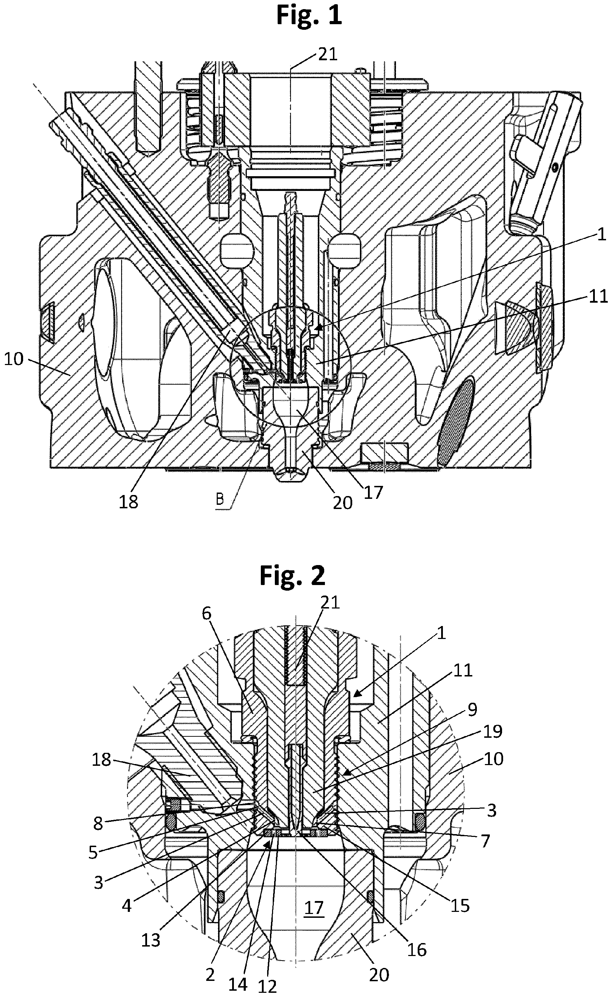

Fig. 1 shows a first embodiment of a cylinder head 10 of an internal combustion engine having a spark plug 1. Fig. 2 shows detailed view B of Fig. 1.

The cylinder head 10 illustrated by Fig. 1 and 2 comprises a pre-chamber 17, wherein the pre-chamber 17 and the whole pre-chamber assembly cooperating with the pre-chamber is arranged in a cylinder head 10 of an internal combustion engine.

Fig. 2 represents a detail view of Fig. 1, wherein the region of the pre-chamber 17 and the components arranged therein, especially the ignition device 2 of the spark plug 1, are depicted in a scaled up manner.

The pre-chamber 17 shown by this specific embodiment is formed by two separate components which form a cavity in the mounted state. The upper part forming the pre-chamber 17 is a spark plug sleeve 11 and the lower part a pre-chamber body 20 which are connected.

The spark plug sleeve 11 and the pre-chamber body 20 are placed in a cylinder head 10 of an internal combustion engine, wherein the pre-chamber body 20 (forming the distal end of the pre-chamber assembly) protrudes into a main combustion chamber of the internal combustion chamber.

The spark plug sleeve 11 carries the pre-chamber injector 18 and the spark plug 1, wherein the spark plug sleeve 11 comprises an upper opening which forms the proximal end of the pre-chamber assembly.

The pre-chamber injector 18 is fluidically connected to the supply channels 3 of the spark plug 1, by use of the and the pre-chamber injector 18 and the supply channels 3 air, fuel or and air-fuel-mixture can be supplied to the pre-chamber 17.

The supply channels 3 of the spark plug 1 are arranged in the base body 6 of spark plug 1 having an exit opening 4 at the ignition device 2 and an entrance opening 5 positioned distanced from the ignition device 2.

In particular, the entrance opening 5 of the supply channels 3 are provided at the outer surface of the base body 6 inside a circumferential groove 8 symmetrically surrounding the base body 6.

By use of the circumferential groove 8 the air, fuel or and air-fuel-mixture provided by the pre-chamber injector 18 can be supplied to the entrance openings 5 of the supply channels 3 independently from a rotational relative position of the spark plug 1 inside the pre-chamber sleeve 11.

The base body 6 is provided by at least four supply channels 3 evenly distributed around the outer surface of the base body 6, preferably being symmetrically arranged with regard to the central axis 21.

The outer surface of the base body 6 - being provided by the circumferential groove 8 - also provides the mounting portion 9 of the spark plug 1 for mounting the spark plug 1 inside the spark plug sleeve 11.

The mounting portion 9 is provided by an external threaded surface surrounding the base body 6.

The base body 6 comprises a receiving cavity 7, wherein the ignition device 3 is arranged at the receiving cavity 7.

Furthermore, in this embodiment the ignition device 3 is at least partially surrounded by the base body 6.

The exiting openings 4 of the supply channels 3 are placed in the receiving cavity 7, wherein air, fuel or air-fuel mixture supplied via the supply channels 3 is passed via the ignition device 2 into the pre-chamber 17.

Therefore, the air, fuel or air-fuel mixture supplied to the pre-chamber 17 can be used for active cooling of the ignition device 2, wherein a possibility is provided to actively cool the ignition device 2 of the spark plug 2 and therefore provide an alternative or additional way of heat dissipation from the spark plug 1.

The ignition device 2 of the spark plug 1 comprises a middle electrode 12 and a ground electrode 13, wherein a spark gap 14 is provided between the middle electrode 12 and the ground electrode 13.

The spark gap 14 and the close area in the vicinity of the spark gap 14 defines in this embodiment the ignition area of the spark plug 1.

The ground electrode 13 is designed as ring electrode, wherein the ring electrode surrounds a middle electrode 12 of circular shape and an annular spark gap 14 is formed between the ground electrode 13 and the middle electrode 12.

The base body 6 is designed as ground electrode carrier 15, wherein the at least one ground electrode 13 is connected to the ground electrode carrier 15 by laser beam welding.

The spark plug 1 furthermore comprises a centrally arranged middle electrode carrier 16, wherein the middle electrode 12 is connected to the middle electrode carrier 15 laser beam welding.

As can be seen, the only fluidically connection between the exiting openings 4 of the supply channels 3 and the pre-chamber 17 is provided by the spark gap 14, wherein the air, fuel or air-fuel mixture provided by the supply channels 3 has to be passed via the spark gap 14 into the pre-chamber 17.

By use of such a configuration the electrodes 12,13 of the spark plug 1 effected to the highest thermal conditions can be cooled in the most affective way.

Between the middle electrode carrier 16 and the ground electrode carrier 15 (the base body 6) an isolator 19 is arranged.

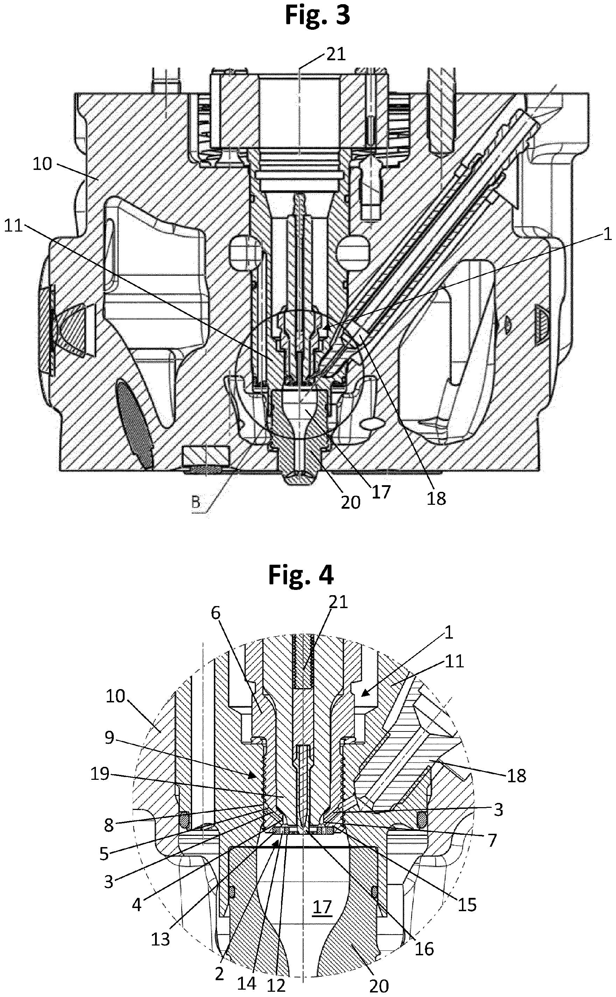

Fig. 3 shows a second embodiment of a cylinder head 10 of an internal combustion engine having a spark plug 1, wherein fig. 4 shows a detailed view B of fig. 3.

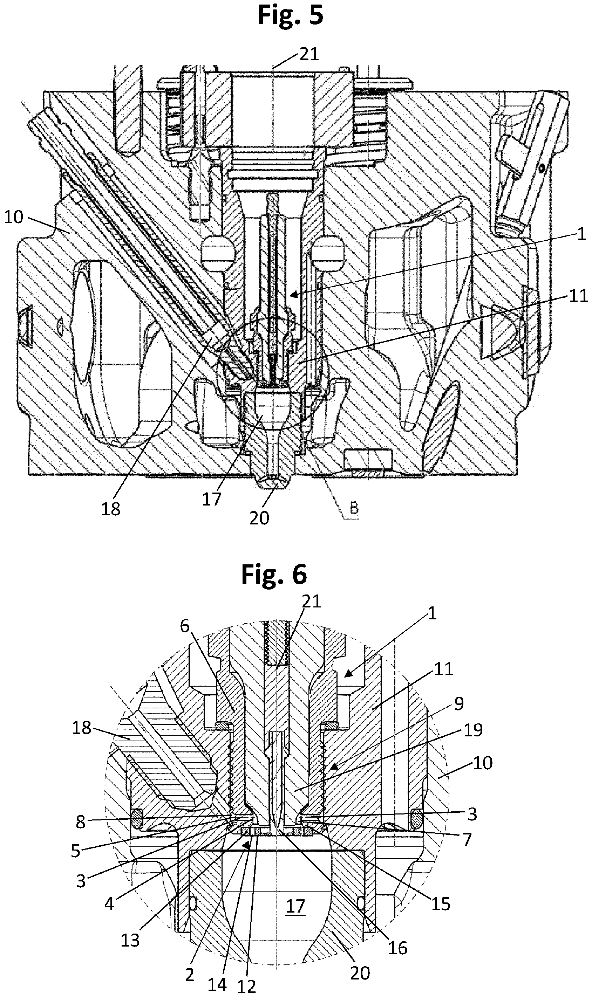

Fig. 5 shows a third embodiment of a cylinder head 10 of an internal combustion engine having a spark plug 1, wherein fig. 6 shows a detailed view B of fig. 5.

The first, second and third embodiment of a cylinder head mainly differ by the arranges spark plugs 1, wherein the sizes and orientations of the supply channels 3 differ.

### Used reference signs:

- 1: spark plug
- 2: ignition device
- 3: supply channel
- 4: exiting opening
- 5: entrance opening
- 6: base body
- 7: receiving cavity
- 8: circumference groove
- 9: mounting portion
- 10: cylinder head
- 11: spark plug sleeve
- 12: middle electrode
- 13: ground electrode
- 14: spark gap
- 15: ground electrode carrier
- 16: middle electrode carrier
- 17: pre-chamber
- 18: pre-chamber injector
- 19: insulator
- 20: pre-chamber body
- 21: central axis

## Claims

1. Spark plug for igniting a combustible gaseous fuel mixture in an internal combustion engine, comprising an ignition area, wherein the spark plug is configured to deliver an ignition energy in the ignition area, **characterized in that** at least one supply channel (3) for conveying fuel and/or air is provided, the at least one supply channel (3) having an exit opening (4) at the ignition area and an entrance opening (5) positioned distanced from the ignition area.

2. Spark plug according to claim 1, wherein the spark plug (1) comprises a - preferably rotationally symmetric - base body (6) having a receiving cavity (7), wherein an ignition device (2) is arranged at and/or in the receiving cavity (7), particular preferred wherein the ignition device (2) is at least partially surrounded by the base body (6).

3. Spark plug according to claim 2, wherein the exit opening (4) is arranged in the receiving cavity (7).

4. Spark plug according to claim 2 or 3, wherein the base body (6) comprises at an outer surface a circumferential groove (8), wherein the entrance opening (5) of the at least one supply channel (3) is placed at the circumferential groove (8), preferably at the base of the groove (8).

5. Spark plug according to at least one of the preceding claims, wherein the spark plug (1) comprises a mounting portion (9), preferably a threaded surface, for mounting the spark plug (1) in the internal combustion engine and/or in a cylinder head (10) and/or in a spark plug sleeve (11), wherein the entrance opening (5) is arranged at the mounting portion (9).

6. Spark plug according to at least one of the claims 2 to 4 and claim 5, wherein the mounting portion (9) at least partially surrounds the base body (6).

7. Spark plug according to at least one of the preceding claims, wherein an ignition device (2) of the spark plug (1) comprises at least one middle electrode (12) and at least one ground electrode (13), wherein a spark gap (14) is provided between the at least one middle electrode (12) and the least one ground electrode (13).

8. Spark plug according to claim 7, wherein the base body (6) is designed as ground electrode carrier (15), preferably wherein the at least one ground electrode (13) is connected to the ground electrode carrier (15) by laser beam welding.

9. Spark plug according to claim 7 or 8, wherein that the at least one ground electrode (13) is designed as ring electrode, wherein the ring electrode surrounds a middle electrode (12) of circular shape at least partially, wherein an annular spark gap (14) is formed between the ground electrode (13) and the middle electrode (12).

10. Spark plug according to at least one of the claims 7 to 9, wherein the at least one middle electrode (12) is connected at a centrally arranged middle electrode carrier (16), preferably connected to the middle electrode carrier (16) by laser beam welding.

11. Spark plug according to at least one of the claims 7 to 10, wherein an isolator (19) is arranged between the middle electrode carrier (16) and the ground electrode carrier (16).

12. Internal combustion engine comprising at least one cylinder head (10) and a spark plug (1) according to at least one of the preceding claims arranged at the cylinder head (10) facing a combustion chamber, preferably a precombustion chamber (17), of the internal combustion engine, wherein an injector (18) or a valve is fluidically connected to the entrance opening (5) to supply air, fuel or air-fuel mixture by use of the at least one supply channel (3) to the combustion chamber passing, preferably passing via, the ignition area of the spark plug (1).
